# EUROPEAN PATENT APPLICATION

(11) **EP 4 478 460 A1**
(43) Date of publication of application: **18.12.2024**
(21) Application number: 23767149.0
(22) Date of filing: 07.03.2023
(51) Int. Cl.: H01M 4/62, H01M 4/66, H01M 4/04, H01M 4/13, C08F 277/00, C08F 279/02, C08F 4/32, C08F 2/50, C08K 5/10

(54) **ELECTRODE FOR LITHIUM SECONDARY BATTERY AND MANUFACTURING METHOD THEREOF**

(30) Priority: 07.03.2022 KR 20220028612
(71) Applicant: LG Chem, Ltd., Yeongdeungpo-gu Seoul 07336 (KR)
(72) Inventor: HAN, Sung-Jae, Daejeon 34122 (KR); MUN, Sung Cik, Daejeon 34122 (KR); LEE, Joo-Sung, Daejeon 34122 (KR); JUNG, Kil-An, Daejeon 34122 (KR); KIM, Min-Soo, Daejeon 34122 (KR); SEO, Jung-Hyun, Daejeon 34122 (KR); JUNG, Soon-Hwa, Daejeon 34122 (KR)
(74) Representative: Hoffmann Eitle
(86) International application number: PCT/KR2023/003131
(87) International publication number: WO 2023/172048

(57) **Abstract**

Disclosed is an electrode for a lithium secondary battery which shows reinforced adhesion between an electrode current collector and an electrode active material layer and can prevent the electrode active material from being separated from the electrode current collector, even when a crosslinked binder is contained in the electrode active material layer. Also disclosed is a method for manufacturing the electrode for a lithium secondary battery. The electrode for a lithium secondary battery, includes: an electrode current collector; an adhesion-enhancing layer disposed on at least one surface of the electrode current collector, and containing a first binder and a first conductive material; and an electrode active material layer disposed on the top surface of the adhesion-enhancing layer, and containing an electrode active material, a second conductive material and a second binder, wherein the first binder and the second binder include a binder polymer having a crosslinked structure.

## Description

### TECHNICAL FIELD

The present disclosure relates to an electrode for a lithium secondary battery and a method for manufacturing the same.

The present application claims priority to Korean Patent Application No. 10-2022-0028612 filed on March 7, 2022 in the Republic of Korea, the disclosures of which are incorporated herein by reference.

### BACKGROUND ART

Recently, energy storage technology has been given an increasing attention. As the application of energy storage technology has been extended to energy for cellular phones, camcorders and notebook PCs and even to energy for electric vehicles, there has been an increasing need for providing batteries used as power sources for such electronic devices with high energy density. Lithium secondary batteries are those satisfying such a need best. Therefore, active studies have been conducted about such lithium secondary batteries.

In general, such a lithium secondary battery includes a positive electrode including a lithium metal oxide, a negative electrode including a carbonaceous material, or the like, an electrolyte containing a lithium salt and an organic solvent, and a separator interposed between the positive electrode and the negative electrode so that both electrodes may be electrically insulated from each other.

Currently, poly(vinylidene fluoride) is used widely as a binder for a positive electrode. Use of poly(vinylidene fluoride) as a binder requires use of N-methyl-2-pyrrolidone (NMP) as a solvent. However, N-methyl-2-pyrrolidone is problematic in that it has a high boiling point and requires a long time for a drying step, and is harmful to the environment and requires a significant cost in constructing a system for recovering it.

When using a crosslinked binder as a binder for a positive electrode, there is an advantage in that another solvent may be used instead of N-methyl-2-pyrrolidone. However, such a crosslinked binder frequently has a molecular weight less than the molecular weight of poly(vinylidene fluoride). Therefore, there is a problem in that use of such a crosslinked binder at the same content as poly(vinylidene fluoride) results in insufficient adhesion between an electrode active material layer and an electrode current collector as compared to poly(vinylidene fluoride).

Therefore, there is a need for a technology capable of preventing the problem of degradation of the adhesion between the electrode active material layer and the electrode current collector, while using a crosslinked binder as a binder for a positive electrode, instead of poly(vinylidene fluoride).

### DISCLOSURE

### Technical Problem

The present disclosure is designed to solve the problems of the related art, and therefore the present disclosure is directed to providing an electrode for a lithium secondary battery which ensures adhesion between an electrode active material layer and an electrode current collector even when a crosslinked binder is contained in the electrode active material layer, and a lithium secondary battery including the electrode.

The present disclosure is also directed to providing a method for manufacturing an electrode for a lithium secondary battery which ensures adhesion between an electrode active material layer and an electrode current collector even when a crosslinked binder is contained in the electrode active material layer.

### Technical Solution

In one aspect of the present disclosure, there is provided an electrode for a lithium secondary battery according to any one of the following embodiments.

According to the first embodiment of the present disclosure, there is provided an electrode for a lithium secondary battery, including:
an electrode current collector;
an adhesion-enhancing layer disposed on at least one surface of the electrode current collector, and containing a first binder and a first conductive material; and
an electrode active material layer disposed on the top surface of the adhesion-enhancing layer, and containing an electrode active material, a second conductive material and a second binder,
wherein the first binder and the second binder include a binder polymer having a crosslinked structure, and
the first binder and the second binder form a chemical bond with each other.

According to the second embodiment of the present disclosure, there is provided the electrode for a lithium secondary battery as defined in the first embodiment, wherein the first binder includes a crosslinked product of a first functional group-containing polymer with a first crosslinking agent.

According to the third embodiment of the present disclosure, there is provided the electrode for a lithium secondary battery as defined in the second embodiment, wherein the first functional group-containing polymer includes an isoprene monomer-derived repeating unit, a butadiene monomer-derived repeating unit, a cyclopentadiene monomer-derived repeating unit, an ethylidene norbornene monomer-derived repeating unit, a vinyl norbornene monomer-derived repeating unit, or two or more of them.

According to the fourth embodiment of the present disclosure, there is provided the electrode for a lithium secondary battery as defined in the second or the third embodiment, wherein the functional group includes a carboxyl group, a (meth)acrylate group, a vinyl group, a vinyl ether group, an epoxy group, or two or more of them.

According to the fifth embodiment of the present disclosure, there is provided the electrode for a lithium secondary battery as defined in any one of the second to the fourth embodiments, wherein the first crosslinking agent includes a monofunctional (meth)acrylate, a difunctional (meth)acrylate, a multifunctional (meth)acrylate, or two or more of them.

According to the sixth embodiment of the present disclosure, there is provided the electrode for a lithium secondary battery as defined in any one of the second to the fifth embodiments, wherein the first crosslinking agent includes a linear or branched alkyl (meth)acrylate, a cyclic (meth)acrylate, an aromatic (meth)acrylate, or two or more of them.

According to the seventh embodiment of the present disclosure, there is provided the electrode for a lithium secondary battery as defined in any one of the second to the sixth embodiments, wherein the first crosslinking agent includes 2-ethylhexyl acrylate, isostearyl acrylate, dicyclopentanyl acrylate, n-vinyl caprolactam, phenoxyethyl (meth)acrylate, 1,6-hexanediol di(meth)acrylate, 1,9-hexanediol di(meth)acrylate, tricyclodecane dimethanol diacrylate, isobornyl acrylate, polyethylene glycol diacrylate, 1,12-dodecanediol dimethacrylate, or two or more of them.

According to the eighth embodiment of the present disclosure, there is provided the electrode for a lithium secondary battery as defined in any one of the second to the seventh embodiments, wherein the weight ratio of the first functional group-containing polymer to the first crosslinking agent is 10:90-90:10.

According to the ninth embodiment of the present disclosure, there is provided the electrode for a lithium secondary battery as defined in any one of the first to the eighth embodiments, wherein the first binder includes a crosslinked product of an acryl-modified polyurethane resin, an acryl-modified polyethylene glycol resin or both.

According to the tenth embodiment of the present disclosure, there is provided the electrode for a lithium secondary battery as defined in any one of the first to the ninth embodiments, wherein the second binder includes a crosslinked product of a second functional group-containing polymer with a second crosslinking agent.

According to the eleventh embodiment of the present disclosure, there is provided the electrode for a lithium secondary battery as defined in the tenth embodiment, wherein the second functional group-containing polymer includes an isoprene monomer-derived repeating unit, a butadiene monomer-derived repeating unit, a cyclopentadiene monomer-derived repeating unit, an ethylidene norbornene monomer-derived repeating unit, a vinyl norbornene monomer-derived repeating unit, or two or more of them.

According to the twelfth embodiment of the present disclosure, there is provided the electrode for a lithium secondary battery as defined in the tenth or the eleventh embodiment, wherein the functional group includes a carboxyl group, a (meth)acrylate group, a vinyl group, a vinyl ether group, an epoxy group, or two or more of them.

According to the thirteenth embodiment of the present disclosure, there is provided the electrode for a lithium secondary battery as defined in any one of the tenth to the twelfth embodiments, wherein the second crosslinking agent includes a monofunctional (meth)acrylate, a difunctional (meth)acrylate, a multifunctional (meth)acrylate, or two or more of them.

According to the fourteenth embodiment of the present disclosure, there is provided the electrode for a lithium secondary battery as defined in any one of the tenth to the thirteenth embodiments, wherein the second crosslinking agent includes a linear or branched alkyl (meth)acrylate, a cyclic (meth)acrylate, an aromatic (meth)acrylate, or two or more of them.

According to the fifteenth embodiment of the present disclosure, there is provided the electrode for a lithium secondary battery as defined in any one of the tenth to the fourteenth embodiments, wherein the second crosslinking agent includes 2-ethylhexyl acrylate, isostearyl acrylate, dicyclopentanyl acrylate, n-vinyl caprolactam, phenoxyethyl (meth)acrylate, 1,6-hexanediol di(meth)acrylate, 1,9-hexanediol di(meth)acrylate, tricyclodecane dimethanol diacrylate, isobornyl acrylate, polyethylene glycol diacrylate, 1,12-dodecanediol dimethacrylate, or two or more of them.

According to the sixteenth embodiment of the present disclosure, there is provided the electrode for a lithium secondary battery as defined in any one of the tenth to the fifteenth embodiments, wherein the weight ratio of the second functional group-containing polymer to the second crosslinking agent is 10:90-90: 10.

According to the seventeenth embodiment of the present disclosure, there is provided the electrode for a lithium secondary battery as defined in any one of the first to the sixteenth embodiments, wherein the content of the second binder is 1.5-3.5 wt% based on 100 wt% of the electrode active material layer.

According to the eighteenth embodiment of the present disclosure, there is provided the electrode for a lithium secondary battery as defined in any one of the first to the seventeenth embodiments, wherein the content of the first binder is 2-70 wt% based on 100 wt% of the adhesion-enhancing layer.

According to the nineteenth embodiment of the present disclosure, there is provided the electrode for a lithium secondary battery as defined in any one of the first to the eighteenth embodiments, wherein the content of the first conductive material is 0.1-10 wt% based on 100 wt% of the adhesion-enhancing layer.

According to the twentieth embodiment of the present disclosure, there is provided the electrode for a lithium secondary battery as defined in any one of the first to the nineteenth embodiments, which is a positive electrode.

In another aspect of the present disclosure, there is provided a method for manufacturing an electrode for a lithium secondary battery according to any one of the following embodiments.

According to the twenty-first embodiment of the present disclosure, there is provided a method for manufacturing an electrode for a lithium secondary battery, including the steps of:
(S1) coating a composition for forming an adhesion-enhancing layer containing a first functional group-containing polymer, a first crosslinking agent, a first photoinitiator and a first conductive material on an electrode current collector, followed by drying, to form an adhesion-enhancing layer;
(S2) irradiating UV rays to the adhesion-enhancing layer;
(S3) coating a slurry for forming an electrode active material layer containing an electrode active material, a second conductive material, a second functional group-containing polymer, a second crosslinking agent and a second photoinitiator on the top surface of the product of step (S2), followed by drying, to form an electrode active material layer; and
(S4) irradiating UV rays to the product of step (S3).

According to the twenty-second embodiment of the present disclosure, there is provided the method for manufacturing an electrode for a lithium secondary battery as defined in the twenty-first embodiment, wherein the crosslinked product of the first functional group-containing polymer with the first crosslinking agent as a result of step (S2) has a crosslinking degree of 10-80%.

According to the twenty-third embodiment of the present disclosure, there is provided the method for manufacturing an electrode for a lithium secondary battery as defined in the twenty-first or the twenty-second embodiment, wherein the crosslinked binder contained in the adhesion-enhancing layer in the product of step (S4) has a crosslinking degree of 10-100%.

According to the twenty-fourth embodiment of the present disclosure, there is provided the method for manufacturing an electrode for a lithium secondary battery as defined in any one of the twenty-first to the twenty-third embodiments, wherein step (S3) includes the steps of:
coating the slurry for forming an electrode active material layer on the top surface of the product of step (S2), followed by drying, and irradiating UV rays thereto to form a first electrode active material layer; and
coating the slurry for forming an electrode active material layer on the first electrode active material layer, followed by drying, to form a second electrode active material layer.

According to the twenty-fifth embodiment of the present disclosure, there is provided the method for manufacturing an electrode for a lithium secondary battery as defined in any one of the twenty-first to the twenty-fourth embodiments, wherein the first photoinitiator includes a Type 1 photoinitiator.

According to the twenty-sixth embodiment of the present disclosure, there is provided the method for manufacturing an electrode for a lithium secondary battery as defined in the twenty-fifth embodiment, wherein the first photoinitiator further includes a Type 2 photoinitiator.

According to the twenty-seventh embodiment of the present disclosure, there is provided the method for manufacturing an electrode for a lithium secondary battery as defined in any one of the twenty-first to the twenty-sixth embodiments, wherein the first photoinitiator includes bis(2,4,6-trimethylbenzoyl)-phenylphosphine oxide (Irgacure 819), diphenyl (2,4,6-trimethylbenzoyl)phosphine oxide (TPO), maleimide, 2,4,5-trimethylbenzoyl-diphenylphosphine oxide, bis(2,6-dimethyloxybenzoyl-2,4,4-trimethylpentyl)phosphine oxide, propanone, oligo(2-hydroxy-2-methyl-1-[4-(1-methylvinyl)phenyl]propanone), hydroxy-2-methyl-1-phenylpropan-1-one, 2-hydroxy-4'-(2-hydroxyethoxy)2-methylpropiophenone (Irgacure 2959), or two or more of them.

According to the twenty-eighth embodiment of the present disclosure, there is provided the method for manufacturing an electrode for a lithium secondary battery as defined in any one of the twenty-first to the twenty-seventeenth embodiments, wherein the content of the first photoinitiator is 0.05-15 wt% based on 100 wt% of the total weight of the first functional group-containing polymer and the first crosslinking agent.

According to the twenty-ninth embodiment of the present disclosure, there is provided the method for manufacturing an electrode for a lithium secondary battery as defined in any one of the twenty-first to the twenty-eighth embodiments, wherein the second photoinitiator includes a Type 1 photoinitiator.

According to the thirtieth embodiment of the present disclosure, there is provided the method for manufacturing an electrode for a lithium secondary battery as defined in the twenty-ninth embodiment, wherein the second photoinitiator further includes a Type 2 photoinitiator.

According to the thirty-first embodiment of the present disclosure, there is provided the method for manufacturing an electrode for a lithium secondary battery as defined in any one of the twenty-first to the thirtieth embodiments, wherein the second photoinitiator includes bis(2,4,6-trimethylbenzoyl)-phenylphosphine oxide (Irgacure 819), diphenyl (2,4,6-trimethylbenzoyl)phosphine oxide (TPO), maleimide, 2,4,5-trimethylbenzoyldiphenylphosphine oxide, bis(2,6-dimethyloxybenzoyl-2,4,4-trimethylpentyl)phosphine oxide, propanone, oligo(2-hydroxy-2-methyl-1-[4-(1-methylvinyl)phenyl]propanone), hydroxy-2-methyl-1-phenylpropan-1-one, 2-hydroxy-4'-(2-hydroxyethoxy)2-methylpropiophenone (Irgacure 2959), or two or more of them.

According to the thirty-second embodiment of the present disclosure, there is provided the method for manufacturing an electrode for a lithium secondary battery as defined in any one of the twenty-first to the thirty-first embodiments, wherein the content of the second photoinitiator is 0.05-20 wt% based on 100 wt% of the total weight of the second functional group-containing polymer and the second crosslinking agent.

According to the thirty-third embodiment of the present disclosure, there is provided the method for manufacturing an electrode for a lithium secondary battery as defined in any one of the twenty-first to the thirty-second embodiments, wherein the irradiation light dose of the UV rays in step (S2) is 10-2,000 mJ/cm².

According to the thirty-fourth embodiment of the present disclosure, there is provided the method for manufacturing an electrode for a lithium secondary battery as defined in any one of the twenty-first to the thirty-third embodiments, wherein the irradiation light dose of the UV rays in step (S4) is 200-10,000 mJ/cm².

In still another aspect of the present disclosure, there is provided a lithium secondary battery according to the following embodiment.

According to the thirty-fifth embodiment of the present disclosure, there is provided a lithium secondary battery including the electrode for a lithium secondary battery as defined in any one of the first to the twentieth embodiments.

### Advantageous Effects

The electrode for a lithium secondary battery according to an embodiment of the present disclosure includes a crosslinked binder in its electrode active material layer, and thus allows use of a solvent other than N-methyl-2-pyrrolidone.

In addition, the electrode for a lithium secondary battery according to an embodiment of the present disclosure includes a crosslinked binder in its electrode active material layer, and thus shows lower swelling property as compared to the conventional binders, thereby providing improved cycle characteristics or battery safety.

The electrode for a lithium secondary battery according to an embodiment of the present disclosure includes an adhesion-enhancing layer containing a crosslinked binder and a conductive material, between its electrode current collector and electrode active material layer, and thus shows improved adhesion between the electrode active material layer and the electrode current collector, even when the crosslinked binder is contained in the electrode active material layer.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic view illustrating the electrode for a lithium secondary battery according to an embodiment of the present disclosure.
FIG. 2 illustrates the result of identification of the chemical bond between the first binder in the adhesion-enhancing layer and the second binder of the electrode active material layer, in the electrode according to Example 2, as analyzed by an infrared spectrometer (Agilent cary 630 FT-IR).

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Specific terms used in the following description are for illustrative purposes and are not limiting. Throughout the specification, such terms as 'one surface' or 'top surface' show the positions and directions in the drawings to which they are referred. Such terms include the above-listed words, derivatives thereof and words having similar meanings.

Throughout the specification, the expression "one layer is disposed on `one surface' or 'top surface' of another layer" covers not only the expression "one layer is in contact with one surface of another layer" but also the expression "an additional layer is present between the two layers".

As used herein, the terms 'first', 'second', or the like, are used to differentiate one constitutional element from another constitutional element, and each constitutional element is not limited to such terms.

In one aspect of the present disclosure, there is provided an electrode for a lithium secondary battery, including:
an electrode current collector;
an adhesion-enhancing layer disposed on at least one surface of the electrode current collector, and containing a first binder and a first conductive material; and
an electrode active material layer disposed on the top surface of the adhesion-enhancing layer, and containing an electrode active material, a second conductive material and a second binder,
wherein the first binder and the second binder include a binder polymer having a crosslinked structure, and
the first binder and the second binder form a chemically bond with each other.

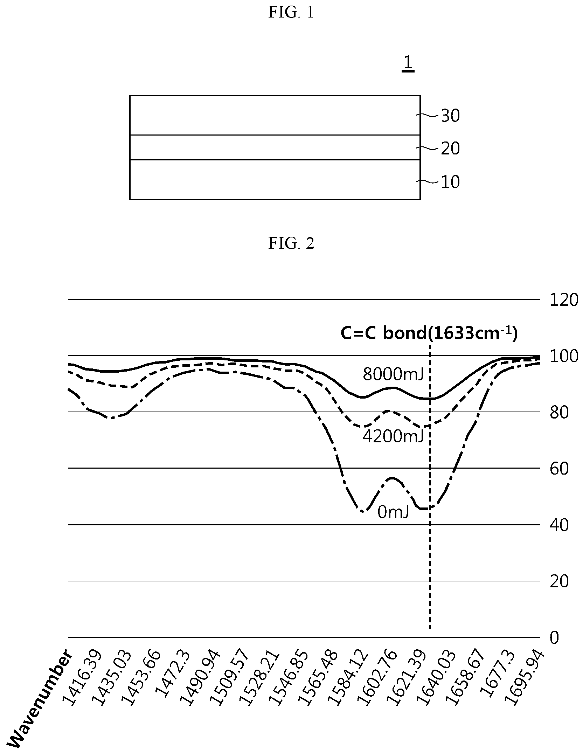

FIG. 1 illustrates the electrode for a lithium secondary battery according to an embodiment of the present disclosure.

Referring to FIG. 1, the electrode 1 for a lithium secondary battery includes an electrode current collector 10.

According to an embodiment of the present disclosure, the electrode current collector 10 may be a positive electrode current collector or a negative electrode current collector.

The positive electrode current collector is not particularly limited, as long as it has conductivity, while not causing any chemical change in the corresponding battery. For example, stainless steel, aluminum, nickel, titanium, baked carbon, or aluminum or stainless steel surface-treated with carbon, nickel, titanium, silver, etc., or the like, may be used.

The negative electrode current collector is not particularly limited, as long as it has conductivity, while not causing any chemical change in the corresponding battery. For example, copper, stainless steel, aluminum, nickel, titanium, baked carbon, or copper or stainless steel surface-treated with carbon, nickel, titanium, silver, etc., aluminum-cadmium alloy, or the like, may be used.

According to an embodiment of the present disclosure, the electrode current collector 10 may have fine surface irregularities on the surface thereof to increase the adhesion of a positive electrode active material or negative electrode active material.

According to an embodiment of the present disclosure, the electrode current collector 10 may have a thickness of 3-500 µm.

Referring to FIG. 1, the electrode 1 for a lithium secondary battery is provided with an adhesion-enhancing layer 20 on at least one surface of the electrode current collector 10. The adhesion-enhancing layer 20 includes a first binder and a first conductive material.

The adhesion-enhancing layer 20 is for use in improving the adhesion between the electrode current collector 10 and the electrode active material layer described hereinafter. The first binder contained in the adhesion-enhancing layer 20 should improve the adhesion between the electrode current collector 10 and the electrode active material layer, while satisfying the stability of a battery at the same time.

The first binder can ensure the adhesion between the electrode current collector 10 and the electrode active material layer described hereinafter. Particularly, when the first binder includes a binder polymer having a crosslinked structure, it shows high affinity with the second binder as described hereinafter to form a stable structure and can improve the adhesion between the electrode current collector 10 and the electrode active material layer. Therefore, even when the electrode active material layer includes a binder polymer having a crosslinked structure with slightly weak adhesion, it is possible to prevent the electrode active material layer from being separated from the electrode current collector, thereby ensuring the stability of a battery.

According to an embodiment of the present disclosure, the first binder may include a crosslinked product of a first functional group-containing polymer with a first crosslinking agent. The first binder may have a crosslinked structure, as the functional group of the first functional group-containing polymer reacts with the first crosslinking agent.

According to an embodiment of the present disclosure, the first functional group-containing polymer may include an isoprene monomer-derived repeating unit, a butadiene monomer-derived repeating unit, a cyclopentadiene monomer-derived repeating unit, an ethylidene norbornene monomer-derived repeating unit, a vinyl norbornene monomer-derived repeating unit, or two or more of them.

According to an embodiment of the present disclosure, the functional group contained in the first functional group-containing polymer may include a carboxyl group, a (meth)acrylate group, a vinyl group, a vinyl ether group, an epoxy group, or two or more of them. When the first functional group-containing polymer includes such a functional group, it is possible to facilitate improvement of the adhesion of the adhesion-enhancing layer 20 to the electrode current collector 10 and improvement of the crosslinkability of the first functional group-containing polymer.

According to an embodiment of the present disclosure, the first functional group-containing polymer may include UC-102, UC-105, UC-203, LBR352, LBR361 and L-SBR-841 grades available from Kurary Co.; CN301, CN303 and CN307 available from Sartomer Co.; or two or more of them.

According to an embodiment of the present disclosure, the first functional group-containing polymer may have a weight average molecular weight of 1,000-60,000 g/mol, 2,000-50,000 g/mol, or 3,000-40,000 g/mol. When the weight average molecular weight of the first functional group-containing polymer satisfies the above-defined range, it is possible to allow the first binder after crosslinking to have such a level of weight average molecular weight that the adhesion strength between the electrode current collector 10 and the electrode active material layer may be ensured with ease.

The weight average molecular weight of the first functional group-containing polymer may be determined by using gel permeation chromatography (GPC) under the following analysis conditions:
- Column: Tosoh, HLC-8321 GPC/HT
- Solvent: TCB (Trichlorobenzene) + 0.04% BHT (after drying with 0.1% CaCl₂)
- Flow rate: 1.0 mL/min
- Sample concentration: 1.5 mg/mL
- Injection amount: 300 µL
- Column temperature: 160°C
- Detector: RI detector
- Standard: Polystyrene (corrected with tertiary function)

According to an embodiment of the present disclosure, the first crosslinking agent may include a monofunctional (meth)acrylate, a difunctional (meth)acrylate, a multifunctional (meth)acrylate, or two or more of them.

Herein, the term `monofunctional acrylate' refers to an acrylate containing only one acrylate group.

The term `difunctional acrylate' refers to an acrylate containing two acrylate groups.

The term `multifunctional acrylate' refers to an acrylate containing three or more acrylate groups.

The difunctional and multifunctional acrylates may include 1,6-hexanediodi(meth)acrylate, 1,9-hexanediodi(meth)acrylate, tricyclodecanedimethanol diacrylate, or the like.

According to an embodiment of the present disclosure, the first crosslinking agent may include a linear or branched alkyl (meth)acrylate, a cyclic (meth)acrylate, an aromatic (meth)acrylate, or two or more of them.

For example, the linear acrylate may include an alkyl acrylate. The branched acrylate may include a branched alkyl acrylate, such as 2-ethylhexyl acrylate, isostearyl acrylate, or the like. The cyclic acrylate may include dicyclopentanyl acrylate, n-vinyl caprolactam, or the like. The aromatic acrylate may include phenoxyethyl (meth)acrylate, or the like.

According to an embodiment of the present disclosure, the first crosslinking agent may include isobornyl acrylate, polyethylene glycol diacrylate, 1,12-dodecanediol dimethacrylate, or two or more of them.

According to an embodiment of the present disclosure, the weight ratio of the first functional group-containing polymer to the first crosslinking agent may be 10:90-90:10, 20:80-80:20, or 30:70-70:30. When the weight ratio of the first functional group-containing polymer to the first crosslinking agent satisfies the above-defined range, the first binder has suitable physical properties and crosslinking density with ease, which is advantageous in terms of ensuring pressing performance.

According to an embodiment of the present disclosure, the first binder may have a crosslinking degree of 10-100%, 50-100%, or 10-95%. When the crosslinking degree of the first binder satisfies the above-defined range, it is possible to ensure excellent adhesion to the electrode active material layer with ease, while ensuring the stability of the adhesion-enhancing layer 20.

The crosslinking degree of the first binder may be determined by using infrared (IR) spectroscopy. The crosslinking degree of the first binder may be determined through the ratio of the peak area of C=C double bonds after crosslinking based on the peak area of C=C double bonds before crosslinking.

According to an embodiment of the present disclosure, the content of the first binder may be 2-70 wt%, 10-70 wt%, or 20-60 wt%, based on 100 wt% of the adhesion-enhancing layer 20. When the content of the first binder satisfies the above-defined range, it is possible to ensure a sufficient level of binding force between the electrode current collector 10 and the electrode active material layer as described hereinafter with ease.

According to an embodiment of the present disclosure, when the first binder is a crosslinked product of the first functional group-containing polymer with the first crosslinking agent, it may be the same type of material as the second binder as described hereinafter or a heterogeneous material.

According to an embodiment of the present disclosure, the first binder may include a crosslinked product of an acryl-modified polyurethane resin, an acryl-modified polyethylene glycol resin or both.

According to an embodiment of the present disclosure, the acryl-modified polyurethane resin may include at least one of the compounds represented by the following Chemical Formula 1 and Chemical Formula 2:

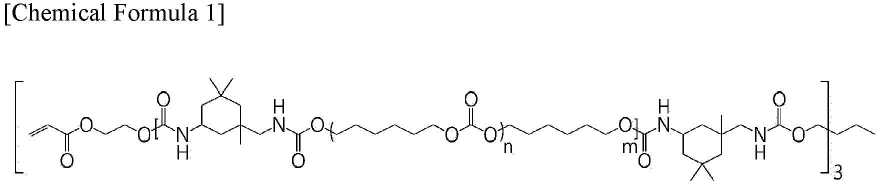

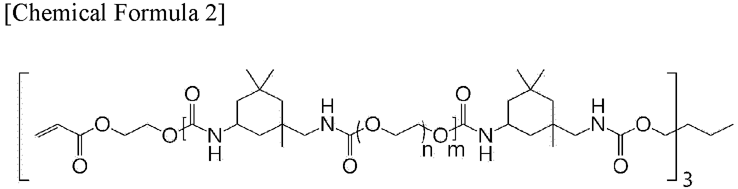

In Chemical Formula 1 and Chemical Formula 2, n may be an integer of 1-30, 3-25 or 5-20, or 8; and m may be an integer of 1-1,000, 3-500, 5-100, 7-50 or 10-30, or 20.

The acryl-modified polyethylene glycol resin may include at least one of the compounds represented by the following Chemical Formula 3 to Chemical Formula 8:

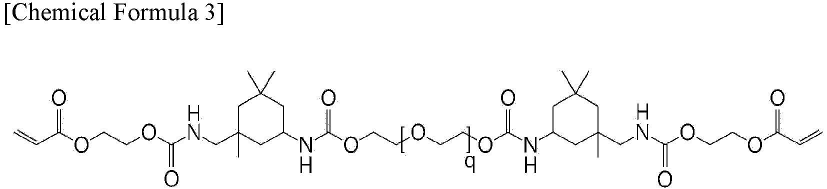

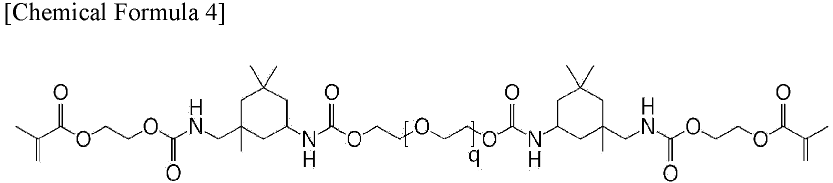

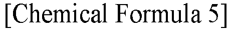

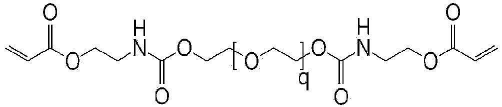

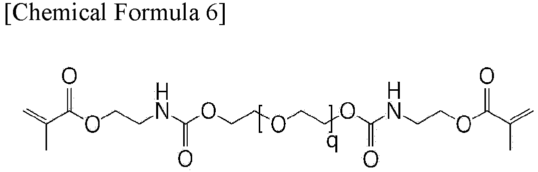

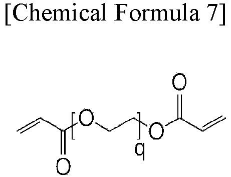

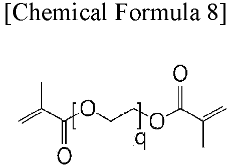

In Chemical Formula 3 to Chemical Formula 8, q may be an integer of 10-1,000, 50-500, 100-350 or 150-250, or 200.

According to an embodiment of the present disclosure, the acryl-modified polyethylene glycol resin may be a reaction product of a hydroxyl or cyano group-containing (meth)acrylate compound or (meth)acryloyl chloride with a polyethylene glycol compound, or a reaction product of a hydroxyl or cyano group-containing (meth)acrylate compound or (meth)acryloyl chloride, a polyethylene glycol compound and a diisocyanate compound.

Particularly, the hydroxyl group-containing (meth)acrylate compound may include 2-hydroxyethyl acrylate or 2-hydroxyethyl methacrylate. The cyano group-containing (meth)acrylate compound may include 2-isocyanatoethyl acrylate or 2-isocyanatoethyl methacrylate. In addition, the (meth)acryloyl chloride may include acryloyl chloride or methacryloyl chloride.

The diisocyanate compound may include isophorone diisocyanate, hexamethylene diisocyanate, methylenephenyl diisocyanate, toluene diisocyanate or dicyclohexylmethane diisocyanate.

The polyethylene glycol compound may include a compound having a repeating unit of -(CH₂-CH₂-O)ₙ- and at least one OH group at the end thereof, but is not limited thereto. Herein, n may be an integer of 1-1,000 or 50-500.

For example, the polyethylene glycol compound may be 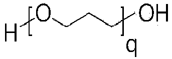 Herein, q may be an integer of 10-1,000, 50-500, 100-350 or 150-250, or 200.

The first conductive material has conductivity, while not causing any chemical change in the corresponding battery, and is not particularly limited, as long as it is mixed with the first binder and maintains conductivity by electrically connecting the electrode active material layer with the electrode current collector 10.

According to an embodiment of the present disclosure, the first conductive material may include: graphite, such as natural graphite or artificial graphite; carbon black, such as acetylene black, Ketjen black, channel black, furnace black, lamp black or thermal black; conductive fibers, such as carbon fibers or metallic fibers; carbon nanotubes, such as single-walled carbon nanotubes, double-walled carbon nanotubes or multi-walled carbon nanotubes; fluorocarbon; metal powder, such as aluminum or nickel powder; conductive whisker, such as zinc oxide or potassium titanate; conductive metal oxide, such as titanium oxide; conductive materials, such as polyphenylene derivatives; or two or more of them.

According to an embodiment of the present disclosure, the first conductive material may be the same kind of material as the second conductive material as described hereinafter, or a heterogeneous material.

According to an embodiment of the present disclosure, the first conductive material may have a predetermined concentration gradient from the bottom surface of the adhesion-enhancing layer 20 that is in contact with the electrode current collector 10 to the top surface of the adhesion-enhancing layer 20 that is in contact with the electrode active material layer as described hereinafter. When the first conductive material has a predetermined concentration gradient as mentioned above, a conductive path may be formed in the adhesion-enhancing layer 20, which facilitates effective maintenance of the electrical conductivity of the electrode.

According to an embodiment of the present disclosure, the content of the first conductive material may be 0.1-10 wt% or 0.3-8 wt%, based on 100 wt% of the adhesion-enhancing layer 20. When the content of the first conductive material satisfies the above-defined range, it is possible to ensure the binding force between the electrode active material and the electrode current collector 10 with ease, while not adversely affecting the electrical conductivity of the electrode.

According to an embodiment of the present disclosure, the adhesion-enhancing layer 20 may have a thickness of 0.1-50 µm, 0.1-10 µm, or 0.1-5 µm. When the thickness of the adhesion-enhancing layer 20 satisfies the above-defined range, it is possible to easily prevent the problems of degradation of the electrical performance of the electrode or an increase in volume of the electrode, while ensuring a sufficient level of binding force between the electrode current collector 10 and the electrode active material layer.

Referring to FIG. 1, the electrode 1 for a lithium secondary battery is provided with an electrode active material layer 30 on the top surface of the adhesion-enhancing layer 20. The electrode active material layer 30 includes an electrode active material, a second conductive material and a second binder.

According to an embodiment of the present disclosure, the electrode active material may be a positive electrode active material or a negative electrode active material.

The positive electrode active material may be a conventional active material used for a lithium secondary battery. Particular examples of the positive electrode active material may include, but are not limited to: layered compounds, such as lithium cobalt oxide (LiCoO₂) or lithium nickel oxide (LiNiO₂), or those compounds substituted with one or more transition metals; lithium manganese oxides, such as those represented by the chemical formula of Li₁₊ₓMn₂₋ₓO₄ (wherein x is 0-0.33), LiMnO₄, LiMnO₃, LiMn₂O₃ and LiMnO₂; lithium copper oxide (Li₂CuO₂); vanadium oxides such as LiVsOs, LiV₃O₄, V₂O₅ or Cu₂V₂O₇; Ni-site type lithium nickel oxides represented by the chemical formula of LiNi₁₋ₓMₓO₂ (wherein M is Co, Mn, Al, Cu, Fe, Mg, B or Ga, and x is 0.01-0.3); lithium manganese composite oxides represented by the chemical formula of LiMn₂₋ₓMₓO₂ (wherein M is Co, Ni, Fe, Cr, Zn or Ta, and x is 0.01-0.1) or Li₂Mn₃MO₈ (wherein M is Fe, Co, Ni, Cu or Zn); LiMn₂O₄ in which Li is partially substituted with an alkaline earth metal ion; disulfide compounds; Fe₂(MoO₄)₃; lithiated cobalt oxide (LiCoO₂), lithium iron phosphate compound (LiFePO₄), lithium nickel cobalt aluminum oxide (Li[Ni.Co.Al]O₂), lithium manganese oxide (LiMn₂O₄), or lithium nickel manganese cobalt oxide (Li[Ni.Mn.Co.]O₂), lithium nickel cobalt manganese aluminum oxide (Li[Ni.Co.Mn.Al]O₂), or the like.

The negative electrode active material may be a conventional active material used for a lithium secondary battery. Particular examples of the negative electrode active material may include lithium-intercalating materials, such as lithium metal or lithium alloys, carbon, petroleum coke, activated carbon, graphite or other carbonaceous materials.

According to an embodiment of the present disclosure, the content of the electrode active material may be 80-99 wt%, 90-99 wt%, or 90-98.5 wt%, based on 100 wt% of the electrode active material layer 30. When the content of the electrode active material satisfies the above-defined range, it is possible to easily ensure the binding force between the electrode active material layer 30 and the electrode current collector 10, while ensuring the initial capacity of the electrode.

According to an embodiment of the present disclosure, the second conductive material has conductivity, while not causing any chemical change in the corresponding battery, and is not particularly limited, as long as it maintains conductivity by electrically connecting the electrode active material particles among themselves, or the electrode active material layer 30 with the electrode current collector 10.

According to an embodiment of the present disclosure, the second conductive material may include: graphite, such as natural graphite or artificial graphite; carbon black, such as acetylene black, Ketjen black, channel black, furnace black, lamp black or thermal black; conductive fibers, such as carbon fibers or metallic fibers; carbon nanotubes, such as single-walled carbon nanotubes, double-walled carbon nanotubes or multi-walled carbon nanotubes; fluorocarbon; metal powder, such as aluminum or nickel powder; conductive whisker, such as zinc oxide or potassium titanate; conductive metal oxide, such as titanium oxide; conductive materials, such as polyphenylene derivatives; or two or more of them.

According to an embodiment of the present disclosure, the content of the second conductive material may be 0.1-5 wt%, 0.3-4 wt%, or 0.4-3 wt%, based on 100 wt% of the electrode active material layer 30. When the content of the second conductive material satisfies the above-defined range, it is possible to easily ensure the binding force between the electrode active material layer 30 and the electrode current collector 10, while not adversely affecting the electrical conductivity of the electrode.

The second binder is an ingredient which assists the binding of the electrode active material with the second conductive material, or the like, or the binding of the electrode active material with the electrode current collector, and has a crosslinked structure.

There is a problem in that an electrode active material causes side reactions with an electrolyte, when being exposed to high temperature, resulting in gas generation. When the second binder having a crosslinked structure is contained in the electrode active material layer, the second binder shows low swelling property with an electrolyte as compared to the conventional electrode binders, and thus can function to protect the electrode active material layer. Therefore, it is possible to reduce side reactions between the electrolyte and the electrode active material, thereby providing improved cycle characteristics or battery safety.

According to an embodiment of the present disclosure, the second binder may include a crosslinked product of a second functional group-containing polymer with a second crosslinking agent. The second binder may have a crosslinked structure, as the functional group of the second functional group-containing polymer reacts with the second crosslinking agent.

According to an embodiment of the present disclosure, the second functional group-containing polymer may include an isoprene monomer-derived repeating unit, a butadiene monomer-derived repeating unit, a cyclopentadiene monomer-derived repeating unit, an ethylidene norbornene monomer-derived repeating unit, a vinyl norbornene monomer-derived repeating unit, or two or more of them.

According to an embodiment of the present disclosure, the functional group contained in the second functional group-containing polymer may include a carboxyl group, a (meth)acrylate group, a vinyl group, a vinyl ether group, an epoxy group, or two or more of them. When the second functional group-containing polymer includes such a functional group, it is possible to facilitate improvement of the adhesion of the electrode active material layer 30 to the electrode current collector 10 and improvement of the crosslinkability of the second functional group-containing polymer.

According to an embodiment of the present disclosure, the second functional group-containing polymer may include UC-102, UC-105, UC-203, LBR352, LBR361 and L-SBR-841 grades available from Kurary Co.; CN301, CN303 and CN307 available from Sartomer Co.; or two or more of them.

According to an embodiment of the present disclosure, the second functional group-containing polymer may have a weight average molecular weight of 1,000-60,000 g/mol, 2,000-50,000 g/mol, or 3,000-40,000 g/mol. When the weight average molecular weight of the second functional group-containing polymer satisfies the above-defined range, it is possible to allow the second binder after crosslinking to have such a level of weight average molecular weight that the adhesion strength between the electrode current collector 10 and the electrode active material layer 30 may be ensured with ease.

The weight average molecular weight of the second functional group-containing polymer may be determined by using gel permeation chromatography (GPC) under the following analysis conditions:
- Column: Tosoh, HLC-8321 GPC/HT
- Solvent: TCB (Trichlorobenzene) + 0.04% BHT (after drying with 0.1% CaCl₂)
- Flow rate: 1.0 mL/min
- Sample concentration: 1.5 mg/mL
- Injection amount: 300 µL
- Column temperature: 160°C
- Detector: RI detector
- Standard: Polystyrene (corrected with tertiary function)

According to an embodiment of the present disclosure, the second crosslinking agent may include a monofunctional (meth)acrylate, a difunctional (meth)acrylate, a multifunctional (meth)acrylate, or two or more of them.

Herein, the term `monofunctional acrylate' refers to an acrylate containing only one acrylate group.

The term `difunctional acrylate' refers to an acrylate containing two acrylate groups.

The term `multifunctional acrylate' refers to an acrylate containing three or more acrylate groups.

The difunctional and multifunctional acrylates may include 1,6-hexanediodi(meth)acrylate, 1,9-hexanediodi(meth)acrylate, tricyclodecanedimethanol diacrylate, or the like.

According to an embodiment of the present disclosure, the second crosslinking agent may include a linear or branched alkyl (meth)acrylate, a cyclic (meth)acrylate, an aromatic (meth)acrylate, or two or more of them.

For example, the linear acrylate may include an alkyl acrylate. The branched acrylate may include a branched alkyl acrylate, such as 2-ethylhexyl acrylate, isostearyl acrylate, or the like. The cyclic acrylate may include dicyclopentanyl acrylate, n-vinyl caprolactam, or the like. The aromatic acrylate may include phenoxyethyl (meth)acrylate, or the like.

According to an embodiment of the present disclosure, the second crosslinking agent may include isobornyl acrylate, polyethylene glycol diacrylate, 1,12-dodecanediol dimethacrylate, or two or more of them.

According to an embodiment of the present disclosure, the weight ratio of the second functional group-containing polymer to the second crosslinking agent may be 10:90-90:10, 20:80-80:20, or 30:70-70:30. When the weight ratio of the second functional group-containing polymer to the second crosslinking agent satisfies the above-defined range, the second binder has suitable physical properties and crosslinking density with ease, which is advantageous in terms of ensuring pressing performance.

According to an embodiment of the present disclosure, the second binder may have a crosslinking degree of 20-100%, 50-100%, or 60-100%. When the crosslinking degree of the second binder satisfies the above-defined range, the content of double bonds remaining in the second binder is reduced, which is favorable to ensuring the stability of a battery.

The crosslinking degree of the second binder may be determined by using infrared (IR) spectroscopy. The crosslinking degree of the second binder may be determined through the ratio of the peak area of C=C double bonds after crosslinking based on the peak area of C=C double bonds before crosslinking.

According to an embodiment of the present disclosure, the content of the second binder may be 1.5-3.5 wt%, or 1.5-2.0 wt%, based on 100 wt% of the electrode active material layer 30. When the content of the second binder satisfies the above-defined range, it is possible to ensure the binding force between the electrode active material layer 30 and the electrode current collector 10, while ensuring a sufficient level of initial capacity of the electrode.

According to an embodiment of the present disclosure, the electrode active material layer 30 may have a thickness of 10-200 µm.

According to the present disclosure, the first binder and the second binder form a chemical bond with each other. For example, the first binder and the second binder may be crosslinked with each other. Since the first binder and the second binder form a chemical bond, it is possible to improve the adhesion between the electrode active material layer 30 and the electrode current collector 10 with ease.

Whether the chemical bond between the first binder and the second binder exists or not may be determined by removing the electrode active material layer from the electrode so that the adhesion-enhancing layer may be exposed, and by checking a decrease in the peak (peak location: 1633 cm⁻¹) of C=C double bonds of the first binder in the adhesion-enhancing layer through infrared (IR) spectroscopy. In other words, after the double bonds present in the first binder contained in the adhesion-enhancing layer form a chemical bond, particularly, a crosslinking bond, with the second binder of the electrode active material layer, the IR peak of C=C double bonds of the first binder is reduced significantly.

Since the electrode for a lithium secondary battery according to an embodiment of the present disclosure includes the first binder including a binder having a crosslinked structure in the adhesion-enhancing layer, it is possible to ensure a sufficient level of adhesion between the electrode active material layer and the electrode current collector, even when the electrode active material layer includes the second binder including a binder having a crosslinked structure.

According to an embodiment of the present disclosure, the adhesion between the electrode active material layer and the electrode current collector may be 10 gf or more.

The adhesion between the electrode active material layer and the electrode current collector may be determined from the 90° peel strength when the electrode current collector is peeled from the electrode active material layer. For example, the adhesion may be determined from the strength when the electrode current collector is peeled from the electrode active material layer at 25°C and at a rate of 150 mm/min, after the electrode is attached to slide glass and fixed. The adhesion of the electrode active material layer to the electrode current collector may be determined by using a peel strength tester (UTA-500N).

The electrode for a lithium secondary battery according to an embodiment of the present disclosure may be obtained by the following method, but is not limited thereto.

In another aspect of the present disclosure, there is provided a method for manufacturing an electrode for a lithium secondary battery, including the steps of:
(S1) coating a composition for forming an adhesion-enhancing layer containing a first functional group-containing polymer, a first crosslinking agent, a first photoinitiator and a first conductive material on an electrode current collector, followed by drying, to form an adhesion-enhancing layer;
(S2) irradiating UV rays to the adhesion-enhancing layer;
(S3) coating a slurry for forming an electrode active material layer containing an electrode active material, a second conductive material, a second functional group-containing polymer, a second crosslinking agent and a second photoinitiator on the top surface of the product of step (S2), followed by drying, to form an electrode active material layer; and
(S4) irradiating UV rays to the product of step (S3).

Hereinafter, the method for manufacturing an electrode for a lithium secondary battery according to an embodiment of the present disclosure will be explained with reference to the main parts thereof.

First, a composition for forming an adhesion-enhancing layer, including a first functional group-containing polymer, a first crosslinking agent, a first photoinitiator and a first conductive material is coated on an electrode current collector, followed by drying, to form an adhesion-enhancing layer (S1).

Reference will be made to the above description about the first functional group-containing polymer, the first crosslinking agent and the first conductive material.

The first photoinitiator allows crosslinking of the first functional group-containing polymer and the first crosslinking agent.

According to an embodiment of the present disclosure, the first photoinitiator may include a Type 1 photoinitiator. For example, the first photoinitiator may include bis(2,4,6-trimethylbenzoyl)-phenylphosphine oxide (Irgacure 819), diphenyl (2,4,6-trimethylbenzoyl)phosphine oxide (TPO), maleimide, 2,4,5-trimethylbenzoyldiphenylphosphine oxide, bis(2,6-dimethyloxybenzoyl-2,4,4-trimethylpentyl)phosphine oxide, propanone, oligo(2-hydroxy-2-methyl-1-[4-(1-methylvinyl)phenyl]propanone), hydroxy-2-methyl-1-phenylpropan-1-one, 2-hydroxy-4' -(2-hydroxyethoxy)2-methylpropiophenone (Irgacure 2959), or two or more of them.

According to an embodiment of the present disclosure, the first photoinitiator may further include a Type 2 photoinitiator, besides the Type 1 photoinitiator. When the first photoinitiator further includes a Type 2 photoinitiator, the crosslinking efficiency may be further increased. Particular examples of the Type 2 photoinitiator may include benzophenone, benzophenone derivatives, camphorquinone, Michler's ketone, 4-(2-hydroxyethoxy)phenyl-(2-hydroxy-2-methylpropyl)ketone, benzyldimethyl ketal, 2-benzyl-2-N,N-dimethylamino-1-(4-morpholinophenyl)-1-butanone, 2-mercaptobenzoxazole, camphorquinone, 2-hydroxy-2-ketyl-1-(4-t-butyl)phenylpropan-1-one, 2-methyl-1-(4-methylthiophenyl)-2-morpholinopropanone, thioxanthone, thioxanthone derivatives, or two or more of them.

Particular examples of the benzophenone derivative may include, but are not limited to: hydroxyacetophenone, 4-methylbezophenone, 4-phenylbenzophenone, 4,4'-dimethylaminobenzophenone, 4,4'-bis(diethylamino)benzophenone, 4-methoxybenzophenone, 4,4'-dimethoxy-benzophenone, 4,4'-dimethylbenzophenone, 4,4'-dichlorobenzophenone, 2,4,6-trimethylbenzophenone, 4-(4-methylthiophenyl)-benzophenone, 3,3'-dimethyl-4-methoxy-benzophenone, methyl-2-benzoyl benzoate, 4-(2-hydroxyethylthio)-benzophenone, 4-(4-tolylthio)benzophenone, 4-benzoyl-N,N,N-trimethylbenzenemethanaminium chloride, 2-hydroxy-3-(4-benzoylphenoxy)-N,N,N-trimethyl-propanaminium chloride monohydrate, 4-hydroxybenzophenone, 4-(13-acryloyl-1,4,7,10,13-pentaoxatridecyl)-benzophenone, 4-benzoyl-N,N-dimethyl-N-[2-(1-oxo-2-propenyl)oxy]ethyl-benzenemethaneminium chloride, or the like.

Particular examples of the thioxanthone derivative may include, but are not limited to: 2-isopropylthioxanthone, 2-chlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3 -(2-methoxyethoxycarbonyl)-thioxanthone, 4-butoxycarbonyl-thioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethyoxy)ethoxycarbonyl]thioxanthone, 1-ethoxycarbonyl-3-(1-methyl-1-morpholinoethyl)-thioxanthone, 2-methyl-6-dimethoxymethyl-thioxanthone, 2-methyl-6-(1,1-dimethoxy-benzyl)-thioxanthone, 2-morpholinomethylthioxanthone, 2-methyl-6-morpholinomethyl-thioxanthone, N-allylthioxanthone-3,4-dicarboximide, N-octylthioxanthone-3,4-dicarboximide, N-(1,1,3,3-tetramethylbutyl)-thioxanthone-3,4,-dicarboximide, 1-phenoxythioxanthone, 6-ethoxycarbonyl-2-methoxythioxanthone, 6-ethoxycarbonyl-2-methylthioxanthone, thioxanthone-2-polyethylene glycol ester, 2-hydroxy-3-(3,4-dimethyl-9-oxo-9H-thioxanthone-2-yloxy)-N,N,N-trimethyl-1-propanaminium chloride, or the like.

The content of the first photoinitiator may be 0.05-15 wt%, 0.1-10 wt%, or 0.1-8 wt%, based on 100 wt% of the total weight of the first functional group-containing polymer and the first crosslinking agent. When the content of the first photoinitiator satisfies the above-defined range, it is possible to accomplish the crosslinking sufficiently and to easily ensure a desired crosslinking degree.

According to an embodiment of the present disclosure, the composition for forming an adhesion-enhancing layer may be prepared by adding the first conductive material to a dispersion medium, carrying out preliminary dispersion, adding the first functional group-containing polymer and the first crosslinking agent, and carrying out mixing.

The dispersion medium is not particularly limited, as long as it can dissolve the first photoinitiator and the first crosslinking agent and can disperse the first conductive material. Particular examples of the dispersion medium include: alcohols, such as ethanol, isopropyl alcohol (IPA), n-propyl alcohol, or the like; ketones, such as acetone, methyl ethyl ketone, or the like; propyl acetate; N-methyl-2-pyrrolidone; dimethyl formamide; dimethyl acetamide; water; or two or more of them.

According to an embodiment of the present disclosure, the composition for forming an adhesion-enhancing layer may further include a dispersing agent. Particular examples of the dispersing agent may include polyvinyl pyrrolidone (PVP), hydroxyethyl cellulose (HEC), hydroxypropyl cellulose (HPC), ethylhydroxyethyl cellulose (EHEC), methyl cellulose (MC), sodium carboxymethyl cellulose (CMC), hydroxyalkylmethyl cellulose, cyanoethylene polyvinyl alcohol, or two or more of them.

The composition for forming an adhesion-enhancing layer may be coated on the electrode current collector by using a conventional method used currently in the art. For example, a spray coating process may be used.

According to an embodiment of the present disclosure, the drying may be carried out by a drying process used conventionally in manufacturing an electrode. For example, the drying may be carried out at 30-100°C, or 40-80°C. In addition, the drying may be carried out by using air for 3-45 seconds, or 5-40 seconds.

Next, UV rays are irradiated to the adhesion-enhancing layer (S2). The first functional group-containing polymer may be crosslinked with the first crosslinking agent by irradiating UV rays to the adhesion-enhancing layer.

According to an embodiment of the present disclosure, the light irradiation dose of UV rays in step (S2) may be 10-2000 mJ/cm², 30-2000 mJ/cm², or 50-1500 mJ/cm². When the light irradiation dose of UV rays in step (S2) is 10-2000 mJ/cm², it is possible to easily control the crosslinking degree of the crosslinked product of the first functional group-containing polymer with the first crosslinking agent to 10-80%.

According to an embodiment of the present disclosure, the crosslinking degree of the crosslinked product of the first functional group-containing polymer with the first crosslinking agent after irradiating UV rays to the adhesion-enhancing layer may be 10-80%, 30-100%, 40-100%, or 40-95%.

Particularly, the crosslinked product of the first functional group-containing polymer with the first crosslinking agent may be a semi-crosslinked product. For example, the crosslinking degree of the crosslinked product of the first functional group-containing polymer with the first crosslinking agent may be 10-80%, or 50-70%. When the crosslinked product of the first functional group-containing polymer with the first crosslinking agent is semi-crosslinked, it is possible to prevent the binder from flowing or undergoing deformation in the adhesion-enhancing layer, while allowing double bonds to remain in the crosslinked product of the first functional group-containing polymer with the first crosslinking agent to form a chemical bond with the crosslinked product of the second functional group-containing polymer with the second crosslinking agent as described hereinafter. In this manner, it is possible to further improve the adhesion between the electrode active material layer and the electrode current collector.

Then, a slurry for forming an electrode active material layer containing an electrode active material, a second conductive material, a second functional group-containing polymer, a second crosslinking agent and a second photoinitiator is coated on the top surface of the product of step (S2), followed by drying, to form an electrode active material layer (S3).

Reference will be made to the above description about the electrode active material, the second conductive material, the second functional group-containing polymer and the second crosslinking agent.

The second photoinitiator allows crosslinking of the second functional group-containing polymer and the second crosslinking agent.

According to an embodiment of the present disclosure, the second photoinitiator may include a Type 1 photoinitiator. For example, the second photoinitiator may include bis(2,4,6-trimethylbenzoyl)-phenylphosphine oxide (Irgacure 819), diphenyl (2,4,6-trimethylbenzoyl)phosphine oxide (TPO), maleimide, 2,4,5-trimethylbenzoyldiphenylphosphine oxide, bis(2,6-dimethyloxybenzoyl-2,4,4-trimethylpentyl)phosphine oxide, propanone, oligo(2-hydroxy-2-methyl-1-[4-(1-methylvinyl)phenyl]propanone), hydroxy-2-methyl-1-phenylpropan-1-one, 2-hydroxy-4'-(2-hydroxyethoxy)2-methylpropiophenone (Irgacure 2959), or two or more of them.

According to an embodiment of the present disclosure, the second photoinitiator may further include a Type 2 photoinitiator, besides the Type 1 photoinitiator. When the second photoinitiator further includes a Type 2 photoinitiator, the crosslinking efficiency may be further increased. Particular examples of the Type 2 photoinitiator may include benzophenone, benzophenone derivatives, camphorquinone, Michler's ketone, 4-(2-hydroxyethoxy)phenyl-(2-hydroxy-2-methylpropyl)ketone, benzyldimethyl ketal, 2-benzyl-2-N,N-dimethylamino-1-(4-morpholinophenyl)-1-butanone, 2-mercaptobenzoxazole, camphorquinone, 2-hydroxy-2-ketyl-1-(4-t-butyl)phenylpropan-1-one, 2-methyl-1-(4-methylthiophenyl)-2-morpholinopropanone, thioxanthone, thioxanthone derivatives, or two or more of them.

Particular examples of the benzophenone derivative may include, but are not limited to: hydroxyacetophenone, 4-methylbezophenone, 4-phenylbenzophenone, 4,4'-dimethylaminobenzophenone, 4,4'-bis(diethylamino)benzophenone, 4-methoxybenzophenone, 4,4'-dimethoxy-benzophenone, 4,4'-dimethylbenzophenone, 4,4'-dichlorobenzophenone, 2,4,6-trimethylbenzophenone, 4-(4-methylthiophenyl)-benzophenone, 3,3'-dimethyl-4-methoxy-benzophenone, methyl-2-benzoyl benzoate, 4-(2-hydroxyethylthio)-benzophenone, 4-(4-tolylthio)benzophenone, 4-benzoyl-N,N,N-trimethylbenzenemethanaminium chloride, 2-hydroxy-3-(4-benzoylphenoxy)-N,N,N-trimethyl-propanaminium chloride monohydrate, 4-hydroxybenzophenone, 4-(13-acryloyl-1,4,7,10,13-pentaoxatridecyl)-benzophenone, 4-benzoyl-N,N-dimethyl-N-[2-(1-oxo-2-propenyl)oxy]ethyl-benzenemethaneminium chloride, or the like.

Particular examples of the thioxanthone derivative may include, but are not limited to: 2-isopropylthioxanthone, 2-chlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3 -(2-methoxyethoxycarbonyl)-thioxanthone, 4-butoxycarbonyl-thioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethyoxy)ethoxycarbonyl]thioxanthone, 1-ethoxycarbonyl-3-(1-methyl-1-morpholinoethyl)-thioxanthone, 2-methyl-6-dimethoxymethyl-thioxanthone, 2-methyl-6-(1,1-dimethoxy-benzyl)-thioxanthone, 2-morpholinomethylthioxanthone, 2-methyl-6-morpholinomethyl-thioxanthone, N-allylthioxanthone-3,4-dicarboximide, N-octylthioxanthone-3,4-dicarboximide, N-(1,1,3,3-tetramethylbutyl)-thioxanthone-3,4,-dicarboximide, 1-phenoxythioxanthone, 6-ethoxycarbonyl-2-methoxythioxanthone, 6-ethoxycarbonyl-2-methylthioxanthone, thioxanthone-2-polyethylene glycol ester, 2-hydroxy-3-(3,4-dimethyl-9-oxo-9H-thioxanthone-2-yloxy)-N,N,N-trimethyl-1-propanaminium chloride, or the like.

According to an embodiment of the present disclosure, the content of the second photoinitiator may be larger than the content of the first photoinitiator. When the electrode active material layer has a larger thickness than the thickness of the adhesion-enhancing layer, the content of the second photoinitiator may be larger than the content of the first photoinitiator.

The content of the second photoinitiator may be 0.05-20 wt%, 0.07-10 wt%, or 0.1-5 wt%, based on 100 wt% of the total weight of the second functional group-containing polymer and the second crosslinking agent. When the content of the second photoinitiator satisfies the above-defined range, it is possible to accomplish the crosslinking sufficiently and to easily ensure a desired crosslinking degree.

According to an embodiment of the present disclosure, the composition for forming an electrode active material layer may be prepared by adding the second conductive material to a dispersion medium, carrying out preliminary dispersion, adding the electrode active material, the second functional group-containing polymer and the second crosslinking agent, and carrying out mixing.

The dispersion medium is not particularly limited, as long as it can dissolve the second photoinitiator and the second crosslinking agent and can disperse the second conductive material. Particular examples of the dispersion medium include: alcohols, such as ethanol, isopropyl alcohol (IPA), n-propyl alcohol, or the like; ketones, such as acetone, methyl ethyl ketone, or the like; propyl acetate; N-methyl-2-pyrrolidone; dimethyl formamide; dimethyl acetamide; water; or two or more of them.

According to an embodiment of the present disclosure, the composition for forming an electrode active material layer may further include a dispersing agent. Particular examples of the dispersing agent may include polyvinyl pyrrolidone (PVP), hydroxyethyl cellulose (HEC), hydroxypropyl cellulose (HPC), ethylhydroxyethyl cellulose (EHEC), methyl cellulose (MC), sodium carboxymethyl cellulose (CMC), hydroxyalkylmethyl cellulose, cyanoethylene polyvinyl alcohol, or two or more of them.

According to an embodiment of the present disclosure, step (S3) may include the steps of: coating the slurry for forming an electrode active material layer on the top surface of the product of step (S2), followed by drying, and irradiating UV rays thereto to form a first electrode active material layer; and coating the slurry for forming an electrode active material layer on the first electrode active material layer, followed by drying, to form a second electrode active material layer.

When the slurry for forming an electrode active material layer is coated at once and UV rays are irradiated, UV rays cannot sufficiently arrive at the vicinity of the interface between the adhesion-enhancing layer and the electrode active material layer adjacent thereto. Therefore, in this case, the second functional group-containing polymer and the second crosslinking agent cannot be crosslinked sufficiently at the vicinity of the interface between the adhesion-enhancing layer and the electrode active material layer adjacent thereto.

When the slurry for forming an electrode active material layer is coated and dried on the top surface of the adhesion-enhancing layer and UV rays are irradiated to form a first electrode active material layer, and then the slurry for forming an electrode active material layer is coated and dried on the first electrode active material layer, it is possible to facilitate crosslinking of the second functional group-containing polymer with the second crosslinking agent even at the vicinity of the interface between the adhesion-enhancing layer and the electrode active material layer adjacent thereto.

According to an embodiment of the present disclosure, the loading amount of the slurry for forming an electrode active material layer used to form the first electrode active material layer may be 2-7 mAh/cm², or 2.5-6 mAh/cm². When the loading amount of the slurry for forming an electrode active material layer satisfies the above-defined range, UV rays can sufficiently arrive even at the vicinity of the interface between the adhesion-enhancing layer and the electrode active material layer adjacent thereto. In this manner, it is possible to facilitate crosslinking of the second functional group-containing polymer with the second crosslinking agent even at the vicinity of the interface between the adhesion-enhancing layer and the electrode active material layer adjacent thereto.

The slurry for forming an electrode active material layer may be coated by using a conventional method used currently in the art. For example, a spray coating process may be used.

According to an embodiment of the present disclosure, the drying may be carried out by a drying process used conventionally in manufacturing an electrode. For example, the drying may be carried out at 30-100°C, or 40-80°C. In addition, the drying may be carried out by using air for 3-45 seconds, or 5-40 seconds.

Next, UV rays are irradiated to the product of step (S3) (S4). The second functional group-containing polymer may be crosslinked with the second crosslinking agent by irradiating UV rays to the electrode active material layer.

According to an embodiment of the present disclosure, the light irradiation dose of UV rays in step (S4) may be 200-10,000 mJ/cm², or 500-8,000 mJ/cm².

According to an embodiment of the present disclosure, as UV rays are irradiated to the electrode active material layer, the crosslinked product of the first functional group-containing polymer with the first crosslinking agent and the crosslinked product of the second functional group-containing polymer with the second crosslinking agent may form a chemical bond with each other. For example, the crosslinked product of the first functional group-containing polymer with the first crosslinking agent and the crosslinked product of the second functional group-containing polymer with the second crosslinking agent may be crosslinked with each other. In this case, it is possible to further improve the adhesion between the electrode active material layer and the electrode current collector.

According to an embodiment of the present disclosure, the crosslinked binder contained in the adhesion-enhancing layer in the product of step (S4) may have a crosslinking degree of 10-100%, 50-100%, or 10-95%. When the crosslinking degree of the binder satisfies the above-defined range, it is possible to easily ensure excellent adhesion to the electrode active material layer, while ensuring the stability of the adhesion-enhancing layer.

The electrode for a lithium secondary battery according to an embodiment of the present disclosure may be used to manufacture a lithium secondary battery together with a separator.

The lithium secondary battery may include a lithium metal secondary battery, a lithium-ion secondary battery, a lithium polymer secondary battery, a lithium-ion polymer secondary battery, or the like.

The separator used for the lithium secondary battery according to an embodiment of the present disclosure is not particularly limited, and may include a porous polymer substrate alone, or may include: a porous polymer substrate; and an organic/inorganic composite porous layer formed on at least one surface of the porous polymer substrate, and containing a plurality of inorganic particles and a binder polymer. The separator is interposed between the positive electrode and the negative electrode and functions to insulate both electrodes from each other.

Any porous polymer substrate may be used with no particular limitation, as long as it is one used generally in the art. For example, the porous polymer substrate may include a polyolefin-based porous polymer membrane or nonwoven web, but is not limited thereto.

The polyolefin-based porous polymer membrane may include membranes formed of polymers including polyolefin polymers, such as polyethylene, including high-density polyethylene, linear low-density polyethylene, low-density polyethylene or ultrahigh-molecular weight polyethylene, polypropylene, polybutylene, or polypentene, alone or in combination of two or more of them.

The nonwoven web may include nonwoven webs formed of polyethylene terephthalate, polybutylene terephthalate, polyester, polyacetal, polyamide, polycarbonate, polyimide, polyetherether ketone, polyether sulfone, polyphenylene oxide, polyphenylene sulfide, polyethylene naphthalene, or two or more of them, besides polyolefin-based nonwoven webs. The structure of the nonwoven web may be a spun-bond nonwoven web or melt-blown nonwoven web including long fibers.

There is no particular limitation in the thickness of the porous polymer substrate, the porous polymer substrate may have a thickness of 3-50 µm, particularly 3-15 µm. Also, although the size and porosity of the pores present in the porous polymer substrate are not particularly limited, it is preferred that the pore size and porosity may be 0.01-50 µm and 10-95%, respectively.

According to an embodiment of the present disclosure, the inorganic particles are not particularly limited, as long as they are electrochemically stable. In other words, the inorganic particles are not particularly limited, as long as they cause no oxidation and/or reduction in the operating voltage range (e.g. 0-5 V based on Li/Li⁺) of an applicable electrochemical device. The inorganic particles may include inorganic particles having a high dielectric constant of 5 or more, or 10 or more, inorganic particles capable of transporting lithium ions, or two or more of them. Particular examples of the inorganic particles having a dielectric constant of 5 or more may include, but are not limited to: BaTiO₃, BaSO₄, Pb(Zr,Ti)O₃ (PZT), Pb₁₋ₓLaₓZr_{1-y}Ti_{y}O₃ (PLZT, wherein 0 < x < 1, 0 < y < 1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂O₃, γ-AlOOH, Al(OH)₃, SiC, TiO₂, or a mixture of two or more of them.

According to an embodiment of the present disclosure, although the particle size of the inorganic particles is not particularly limited, the inorganic particles may preferably have an average particle diameter of 0.01-10 µm, or 0.05-1.0 µm, in order to form an organic/inorganic composite porous layer having a uniform thickness and to provide suitable porosity. Herein, the average particle diameter of the inorganic particles refers to the particle size (D₅₀) at 50% of the accumulated value from the smaller particle side in the particle size distribution of classified particles determined by a conventional particle size analyzer. The particle size distribution may be determined by a laser diffraction analysis method.

According to an embodiment of the present disclosure, particular examples of the binder polymer contained in the separator include, but are not limited to: polyvinylidene fluoride (PVDF), polyvinylidene fluoride-co-hexafluoropropylene, polyvinylidene fluoride-co-trichloroethylene, polymethyl methacrylate, polyacrylonitrile, polyvinyl pyrrolidone, polyvinyl acetate, polyethylene-co-vinyl acetate, polyethylene oxide, cellulose acetate, cellulose acetate butyrate, cellulose acetate propionate, cyanoethylpullulan, cyanoethylpolyvinylalchol, cyanoethyl cellulose, cyanoethyl sucrose, pullulan, carboxymethyl cellulose, acrylonitrile-styrene-butadiene copolymer, polyimide, or two or more of them.

According to an embodiment of the present disclosure, the weight ratio of the inorganic particles to the binder polymer contained in the separator may be 20:80-99.9:0.1, 50:50-99.5:0.5, or 70:30-80:20. When the weight ratio of the inorganic particles to the binder polymer satisfies the above-defined range, it is possible to ensure vacant spaces formed among the inorganic particles sufficiently, while ensuring a sufficient level of adhesion among the inorganic particles.

According to an embodiment of the present disclosure, the organic/inorganic composite porous layer may have a structure in which the inorganic particles are bound to one another by the binder polymer, while they are packed in contact with one another. In this manner, interstitial volumes are formed among the inorganic particles, and the interstitial volumes become vacant spaces to form pores.

According to an embodiment of the present disclosure, the lithium secondary battery includes an electrolyte, and the electrolyte may include an organic solvent and a lithium salt. In addition, an organic solid electrolyte, inorganic solid electrolyte, or the like, may be used as electrolyte.

Particular examples of the organic solvent include aprotic organic solvents, such as N-methyl-2-pyrrolidone, ethylene carbonate, propylene carbonate, butylene carbonate, dimethyl carbonate, diethyl carbonate, γ-butyrolactone, 1,2-dimethoxyethane, tetrahydroxy franc, 2-methyl tetrahydrofuran, dimethyl sulfoxide, 1,3-dioxolan, formamide, dimethyl formamide, dioxolan, acetonitrile, nitromethane, methyl formate, methyl acetate, triphosphate, trimethoxymethane, dioxolan derivatives, sulforane, methyl sulforane, 1,3-dimethyl-2-imidazolidione, propylene carbonate derivatives, tetrahydrofuran derivatives, ethers, methyl propionate, ethyl propionate, or the like.

The lithium salt is a material which can be dissolved in the non-aqueous electrolyte with ease, and particular examples thereof include LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, lithium chloroborate, lithium lower aliphatic carboxylate, lithium tetraphenyl borate, imide, or the like.

In addition, the electrolyte may further include pyridine, triethyl phosphite, triethanolamine, cyclic ethers, ethylene diamine, n-glyme, triamide hexaphosphate, nitrobenzene derivatives, sulfur, quinone imine dyes, N-substituted oxazolidinone, N,N-substituted imidazolidine, ethylene glycol dialkyl ether, ammonium salt, pyrrole, 2-methoxyethaol and aluminum trichloride in order to improve the charge/discharge characteristics, flame resistance, or the like. Optionally, the electrolyte may further include a halogen-containing solvent, such as carbon tetrachloride or trifluoroethylene, in order to impart non-combustibility. The electrolyte may further include carbon dioxide gas in order to improve the high-temperature storage characteristics.

Particular examples of the organic solid electrolyte may include polyethylene derivatives, polyethylene oxide derivatives, polypropylene oxide derivatives, phosphate polymer, polyagitation lysine, polyester sulfide, polyvinyl alcohol, polyvinylidene fluoride, polymers containing an ionically dissociable group, or the like.

Particular examples of the inorganic solid electrolyte may include nitrides, halides and sulfates of Li, such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH and Li₃PO₄-Li₂S-SiS₂.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

Although there is no particular limitation in the outer shape of the lithium secondary battery, the lithium secondary battery may have a cylindrical shape using a can, a prismatic shape, a pouch-like shape or a coin-like shape.

### MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example 1

First, 1.5 g of multi-walled carbon nanotubes (MWCNTs) as a first conductive material and 0.3 g of polyvinyl pyrrolidone (molecular weight 40,000) as a dispersing agent were introduced to 98.3 g of a dispersion medium containing propyl acetate and n-propyl alcohol mixed at a ratio of 60:40. Then, preliminary dispersion was carried out by using a planetary mixer, and a high-pressure dispersion instrument was used to prepare a first conductive material pre-dispersion.

To the prepared first conductive material pre-dispersion, 1 g of UC-102M as a first functional group-containing polymer, 0.9 g of 1,12-dodecanediol dimethacrylate (SR262) as a first crosslinking agent and 0.1 g of Irgacure 819 as a first photoinitiator were introduced. Then, the ingredients were mixed by using a planetary mixer to prepare a composition for forming an adhesion-enhancing layer. The composition was coated on aluminum foil (thickness: 20 µm) in such a manner that the adhesion-enhancing layer might have a thickness of 0.5 µm after drying, followed by drying. After that, UV rays were irradiated thereto at a light dose of 50 mJ/cm² so that the crosslinked product between the first functional group-containing polymer and the first crosslinking agent contained in the adhesion-enhancing layer might have a crosslinking degree of 50%.

After that, 1.5 g of multi-walled carbon nanotubes (MWCNTs) as a second conductive material and 0.3 g of polyvinyl pyrrolidone (molecular weight 40,000) as a dispersing agent were introduced to 98.2 g of a dispersion medium containing propyl acetate and n-propyl alcohol mixed at a ratio of 60:40. Then, preliminary dispersion was carried out by using a planetary mixer, and a high-pressure dispersion instrument was used to prepare a second conductive material pre-dispersion.

To the prepared second conductive material pre-dispersion, 96.2 g of NCMA (Li[Ni.Co.Mn.Al]O₂) was introduced as a positive electrode active material, and 1 g of UC-102M as a second functional group-containing polymer, 0.9 g of 1,12-dodecanediol dimethacrylate (SR262) as a second crosslinking agent and 0.1 g of Irgacure819 as a second photoinitiator were introduced so that the weight ratio (excluding the dispersing agent) of NCMA:the second conductive material: mixture of the second functional group-containing polymer with the second crosslinking agent might be 96.2:1.5:2.0. Then, the ingredients were mixed by using a planetary mixer to prepare a slurry for forming an electrode active material layer.

The prepared slurry for forming an electrode active material layer was coated on the top surface of the adhesion-enhancing layer, followed by drying, and then UV rays were irradiated thereto at a light dose of 8,000 mJ/cm² to obtain an electrode for a lithium secondary battery.

### Example 2

First, 1.5 g of multi-walled carbon nanotubes (MWCNTs) as a first conductive material and 0.3 g of polyvinyl pyrrolidone (molecular weight 40,000) as a dispersing agent were introduced to 98.3 g of a dispersion medium containing propyl acetate and n-propyl alcohol mixed at a ratio of 60:40. Then, preliminary dispersion was carried out by using a planetary mixer, and a high-pressure dispersion instrument was used to prepare a first conductive material pre-dispersion.

A composition for forming an adhesion-enhancing layer was prepared in the same manner as Example 1, except that 1.2 g of an acryl-modified polyurethane resin (weight average molecular weight: 110,000) represented by the following Chemical Formula 1, 1.1 g of an acryl-modified polyethylene glycol resin (weight average molecular weight: 10,000) represented by the following Chemical Formula 3 and 0.2 g of Irgacure819 as a photoinitiator were introduced to the prepared first conductive material pre-dispersion. Then, an adhesion-enhancing layer was formed on a current collector. 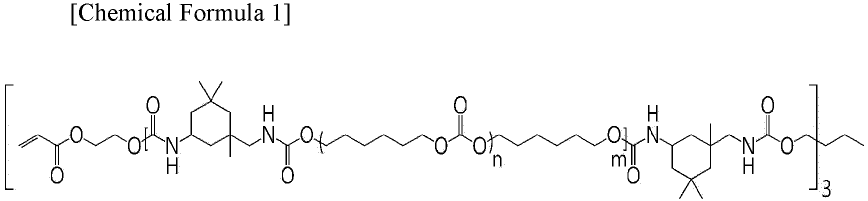 wherein n is 8 (5-20), and m is 20 (10-30). 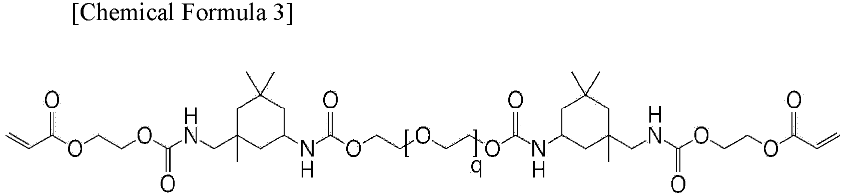 wherein q is 200 (150-250).

After that, a slurry for forming an electrode active material layer was prepared in the same manner as Example 1, except that the current collector having the adhesion-enhancing layer prepared as described above was used. Then, the slurry was coated on the top surface of the adhesion-enhancing layer, followed by drying, and then UV rays were irradiated thereto at a light dose of 8,000 mJ/cm² to obtain an electrode for a lithium secondary battery.

### Comparative Example 1

First, 1.5 g of single-walled carbon nanotubes (SWCNTs) as a conductive material and 0.3 g of polyvinyl pyrrolidone (molecular weight 40,000) as a dispersing agent were introduced to 98.3 g of a dispersion medium containing propyl acetate and n-propyl alcohol mixed at a ratio of 60:40. Then, preliminary dispersion was carried out by using a planetary mixer, and a high-pressure dispersion instrument was used to prepare a conductive material pre-dispersion.

To the prepared conductive material pre-dispersion, 96.2 g of NCMA (Li[Ni.Co.Mn.Al]O₂) was introduced as a positive electrode active material, and 1 g of UC-102M as a functional group-containing polymer, 0.9 g of 1,12-dodecanediol dimethacrylate (SR262) as a crosslinking agent and 0.1 g of Irgacure819 as a second photoinitiator were introduced so that the weight ratio (excluding the dispersing agent) of NCMA:the conductive material: mixture of the functional group-containing polymer with the crosslinking agent might be 96.2: 1.5:2.0. Then, the ingredients were mixed by using a planetary mixer to prepare a slurry for forming an electrode active material layer.

The prepared slurry for forming an electrode active material layer was coated on aluminum foil (thickness: 20 µm), followed by drying, and then UV rays were irradiated thereto at a light dose of 8,000 mJ/cm² to obtain an electrode for a lithium secondary battery.

### Comparative Example 2

An electrode for a lithium secondary battery was obtained in the same manner as Comparative Example 1, except that the weight ratio of NCMA:the conductive material: mixture of the functional group-containing polymer with the crosslinking agent was 94.5:1.5:4.0.

### Comparative Example 3

NCMA (Li[Ni.Co.Mn.Al]O₂) as a positive electrode active material, 1.5 g of single-walled carbon nanotubes (SWCNTs) as a conductive material and poly(vinylidene fluoride) as a binder at a weight ratio of 96.5:1.5:2.0 were introduced to N-methyl-2-pyrrolidone (NMP), followed by mixing, to prepare a slurry for forming an electrode active material layer.

The prepared slurry for forming an electrode active material layer was coated on aluminum foil (thickness: 20 µm), followed by drying, to obtain an electrode for a lithium secondary battery.

### Test Example: Determination of Chemical Bond of First Binder with Second Binder

The presence of a chemical bond between the first binder in the adhesion-enhancing layer and the second binder of the electrode active material layer, in the electrode obtained according to Example 2, was determined through an IR spectrometer (Agilent cary 630 FT-IR). The result is shown in FIG. 2.

Referring to FIG. 2, to carry out the test, the adhesion-enhancing layer was formed on the current collector according to Example 2, UV rays were irradiated thereto, and the slurry for forming an electrode active material layer was coated and dried on the top surface of the UV-irradiated adhesion-enhancing layer to form the electrode active material layer. Then, the light dose of UV rays irradiated thereto was varied to 0 mJ/cm², 4200 mJ/cm² and 8000 mJ/cm² to provide three types of finished electrodes.

Then, the electrode active material layer was removed from each electrode by using a single-sided tape to prepare a sample from which the adhesion-enhancing layer was exposed. The sample was observed in terms of a change in the peak at 1633 cm-1, i.e. peak of carbon-carbon double bonds (C=C) of the first binder contained in the adhesion-enhancing layer, by using an IR spectrometer (Agilent cary 630 FT-IR). When the initial light dose of UV rays is 0 mJ/cm², the peak of carbon-carbon double bonds (C=C) was clearly shown. However, it can be seen that when the light dose of UV rays is increased to 8000 mJ/cm², the peak of double bonds (C=C) is significantly decreased. It can be seen from the result that irradiation of UV rays at 8000 mJ/cm² after forming the electrode active material layer according to Example 2 causes a significant decrease in the peak of double bonds (C=C), as compared to the peak right after forming the electrode active material layer (before irradiating UV rays) on the top surface of the adhesion-enhancing layer according to Example 2. This suggests that the first binder of the adhesion-enhancing layer forms a chemical bond with the second binder, while the first binder loses its double bonds.

### Test Example: Determination of Adhesion to Electrode and Initial Capacity

The electrode for a lithium secondary battery according to each of Examples 1 and 2 and Comparative Examples 1-3 was determined in terms of thickness, adhesion between the electrode active material layer and the electrode current collector and initial capacity. The results are shown in the following Table 1.

The adhesion between the electrode active material layer and the electrode current collector was determined by attaching and fixing the electrode to slide glass and measuring the strength, when the electrode current collector was peeled from the electrode active material layer at 25°C, at a rate of 1.0 mm/sec and at an angle of 180°, by using a peel strength tester (UTA-500N).

The electrode initial capacity was determined by forming a cell and subjecting the cell to charge/discharge at 0.1 C from 2.5 V to 4.25 V.

**[Table 1]**

| | Ex. 1 | Ex. 2 | Comp. Ex. 1 | Comp. Ex. 2 | Comp. Ex. 3 |
|---|---|---|---|---|---|
| Adhesion-enhancing layer | Yes | Yes | None | None | None |
| Thickness (µm) | 76 | 75 | 69 | 70 | 74 |
| Adhesion between electrode active material layer and electrode current collector (gf/15 mm) | 48 | 60 | 12.2 | 32 | 22 |
| Initial capacity (mAh/g) | 217 | 216 | 214 | 205 | 214 |

As can be seen from Table 1, Examples 1 and 2 including the adhesion-enhancing layer containing a crosslinked binder show a similar level of adhesion between the electrode active material layer and the electrode current collector and initial capacity, as compared to the electrode for a lithium secondary battery obtained by using N-methy-2-pyrrolidone as a solvent according to Reference Example, even though each electrode includes the crosslinked binder in the electrode active material layer. On the contrary, in the case of Comparative Example 1, the electrode includes no adhesion-enhancing layer, and thus cannot ensure a sufficient level of adhesion between the electrode active material layer and the electrode current collector, when the electrode includes the crosslinked binder in the electrode active material layer.

In the case of Comparative Example 2, it can be seen that even when the crosslinked binder is contained in an excessive amount in the electrode active material layer, it is not possible to ensure a sufficient level of adhesion between the electrode active material layer and the electrode current collector, and the electrode rather causes degradation of the initial capacity.

In the case of Comparative Example 3, it can be seen that the electrode has no adhesion-enhancing layer and includes a non-crosslinked binder in the electrode active material layer, and thus it is not possible to ensure a sufficient level of adhesion between the electrode active material layer and the electrode current collector.

### [Description of Drawing Numerals]

1: Electrode for lithium secondary battery
10: Electrode current collector
20: Adhesion-enhancing layer
30: Electrode active material layer

## Claims

1. An electrode for a lithium secondary battery, comprising:
an electrode current collector;
an adhesion-enhancing layer disposed on at least one surface of the electrode current collector, and containing a first binder and a first conductive material; and
an electrode active material layer disposed on the top surface of the adhesion-enhancing layer, and containing an electrode active material, a second conductive material and a second binder,
wherein the first binder and the second binder comprise a binder polymer having a crosslinked structure, and
the first binder and the second binder form a chemical bond with each other.

2. The electrode for a lithium secondary battery according to claim 1, wherein the first binder comprises a crosslinked product of a first functional group-containing polymer with a first crosslinking agent.

3. The electrode for a lithium secondary battery according to claim 2, wherein the first functional group-containing polymer comprises an isoprene monomer-derived repeating unit, a butadiene monomer-derived repeating unit, a cyclopentadiene monomer-derived repeating unit, an ethylidene norbornene monomer-derived repeating unit, a vinyl norbornene monomer-derived repeating unit, or two or more of them.

4. The electrode for a lithium secondary battery according to claim 2, wherein the functional group comprises a carboxyl group, a (meth)acrylate group, a vinyl group, a vinyl ether group, an epoxy group, or two or more of them.

5. The electrode for a lithium secondary battery according to claim 2, wherein the first crosslinking agent comprises a monofunctional (meth)acrylate, a difunctional (meth)acrylate, a multifunctional (meth)acrylate, or two or more of them.

6. The electrode for a lithium secondary battery according to claim 2, wherein the first crosslinking agent comprises a linear or branched alkyl (meth)acrylate, a cyclic (meth)acrylate, an aromatic (meth)acrylate, or two or more of them.

7. The electrode for a lithium secondary battery according to claim 2, wherein the first crosslinking agent comprises 2-ethylhexyl acrylate, isostearyl acrylate, dicyclopentanyl acrylate, n-vinyl caprolactam, phenoxyethyl (meth)acrylate, 1,6-hexanediol di(meth)acrylate, 1,9-hexanediol di(meth)acrylate, tricyclodecane dimethanol diacrylate, isobornyl acrylate, polyethylene glycol diacrylate, 1,12-dodecanediol dimethacrylate, or two or more of them.

8. The electrode for a lithium secondary battery according to claim 2, wherein the weight ratio of the first functional group-containing polymer to the first crosslinking agent is 10:90-90:10.

9. The electrode for a lithium secondary battery according to claim 1, wherein the first binder comprises a crosslinked product of an acryl-modified polyurethane resin, an acryl-modified polyethylene glycol resin or both.

10. The electrode for a lithium secondary battery according to claim 1, wherein the second binder comprises a crosslinked product of a second functional group-containing polymer with a second crosslinking agent.

11. The electrode for a lithium secondary battery according to claim 10, wherein the second functional group-containing polymer comprises an isoprene monomer-derived repeating unit, a butadiene monomer-derived repeating unit, a cyclopentadiene monomer-derived repeating unit, an ethylidene norbornene monomer-derived repeating unit, a vinyl norbornene monomer-derived repeating unit, or two or more of them.

12. The electrode for a lithium secondary battery according to claim 10, wherein the functional group comprises a carboxyl group, a (meth)acrylate group, a vinyl group, a vinyl ether group, an epoxy group, or two or more of them.

13. The electrode for a lithium secondary battery according to claim 10, wherein the second crosslinking agent comprises a monofunctional (meth)acrylate, a difunctional (meth)acrylate, a multifunctional (meth)acrylate, or two or more of them.

14. The electrode for a lithium secondary battery according to claim 10, wherein the second crosslinking agent comprises a linear or branched alkyl (meth)acrylate, a cyclic (meth)acrylate, an aromatic (meth)acrylate, or two or more of them.

15. The electrode for a lithium secondary battery according to claim 10, wherein the second crosslinking agent comprises 2-ethylhexyl acrylate, isostearyl acrylate, dicyclopentanyl acrylate, n-vinyl caprolactam, phenoxyethyl (meth)acrylate, 1,6-hexanediol di(meth)acrylate, 1,9-hexanediol di(meth)acrylate, tricyclodecane dimethanol diacrylate, isobornyl acrylate, polyethylene glycol diacrylate, 1,12-dodecanediol dimethacrylate, or two or more of them.

16. The electrode for a lithium secondary battery according to claim 10, wherein the weight ratio of the second functional group-containing polymer to the second crosslinking agent is 10:90-90:10.

17. The electrode for a lithium secondary battery according to claim 1, wherein the content of the second binder is 1.5-3.5 wt% based on 100 wt% of the electrode active material layer.

18. The electrode for a lithium secondary battery according to claim 1, wherein the content of the first binder is 2-70 wt% based on 100 wt% of the adhesion-enhancing layer.

19. The electrode for a lithium secondary battery according to claim 1, wherein the content of the first conductive material is 0.1-10 wt% based on 100 wt% of the adhesion-enhancing layer.

20. The electrode for a lithium secondary battery according to claim 1, which is a positive electrode.

21. A method for manufacturing an electrode for a lithium secondary battery, comprising the steps of:
(S1) coating a composition for forming an adhesion-enhancing layer containing a first functional group-containing polymer, a first crosslinking agent, a first photoinitiator and a first conductive material on an electrode current collector, followed by drying, to form an adhesion-enhancing layer;
(S2) irradiating UV rays to the adhesion-enhancing layer;
(S3) coating a slurry for forming an electrode active material layer containing an electrode active material, a second conductive material, a second functional group-containing polymer, a second crosslinking agent and a second photoinitiator on the top surface of the product of step (S2), followed by drying, to form an electrode active material layer; and
(S4) irradiating UV rays to the product of step (S3).

22. The method for manufacturing an electrode for a lithium secondary battery according to claim 21, wherein the crosslinked product of the first functional group-containing polymer with the first crosslinking agent as a result of step (S2) has a crosslinking degree of 10-80%.

23. The method for manufacturing an electrode for a lithium secondary battery according to claim 21, wherein the crosslinked binder contained in the adhesion-enhancing layer in the product of step (S4) has a crosslinking degree of 10-100%.

24. The method for manufacturing an electrode for a lithium secondary battery according to claim 21, wherein step (S3) comprises the steps of:
coating the slurry for forming an electrode active material layer on the top surface of the product of step (S2), followed by drying, and irradiating UV rays thereto to form a first electrode active material layer; and
coating the slurry for forming an electrode active material layer on the first electrode active material layer, followed by drying, to form a second electrode active material layer.

25. The method for manufacturing an electrode for a lithium secondary battery according to claim 21, wherein the first photoinitiator comprises a Type 1 photoinitiator.

26. The method for manufacturing an electrode for a lithium secondary battery according to claim 25, wherein the first photoinitiator further comprises a Type 2 photoinitiator.

27. The method for manufacturing an electrode for a lithium secondary battery according to claim 21, wherein the first photoinitiator comprises bis(2,4,6-trimethylbenzoyl)-phenylphosphine oxide (Irgacure 819), diphenyl (2,4,6-trimethylbenzoyl)phosphine oxide (TPO), maleimide, 2,4,5-trimethylbenzoyldiphenylphosphine oxide, bis(2,6-dimethyloxybenzoyl-2,4,4-trimethylpentyl)phosphine oxide, propanone, oligo(2-hydroxy-2-methyl-1-[4-(1-methylvinyl)phenyl]propanone), hydroxy-2-methyl-1-phenylpropan-1-one, 2-hydroxy-4'-(2-hydroxyethoxy)2-methylpropiophenone (Irgacure 2959), or two or more of them.

28. The method for manufacturing an electrode for a lithium secondary battery according to claim 21, wherein the content of the first photoinitiator is 0.05-15 wt% based on 100 wt% of the total weight of the first functional group-containing polymer and the first crosslinking agent.

29. The method for manufacturing an electrode for a lithium secondary battery according to claim 21, wherein the second photoinitiator comprises a Type 1 photoinitiator.

30. The method for manufacturing an electrode for a lithium secondary battery according to claim 29, wherein the second photoinitiator further comprises a Type 2 photoinitiator.

31. The method for manufacturing an electrode for a lithium secondary battery according to claim 21, wherein the second photoinitiator comprises bis(2,4,6-trimethylbenzoyl)-phenylphosphine oxide (Irgacure 819), diphenyl (2,4,6-trimethylbenzoyl)phosphine oxide (TPO), maleimide, 2,4,5-trimethylbenzoyldiphenylphosphine oxide, bis(2,6-dimethyloxybenzoyl-2,4,4-trimethylpentyl)phosphine oxide, propanone, oligo(2-hydroxy-2-methyl-1-[4-(1-methylvinyl)phenyl]propanone), hydroxy-2-methyl-1-phenylpropan-1-one, 2-hydroxy-4'-(2-hydroxyethoxy)2-methylpropiophenone (Irgacure 2959), or two or more of them.

32. The method for manufacturing an electrode for a lithium secondary battery according to claim 21, wherein the content of the second photoinitiator is 0.05-20 wt% based on 100 wt% of the total weight of the second functional group-containing polymer and the second crosslinking agent.

33. The method for manufacturing an electrode for a lithium secondary battery according to claim 21, wherein the irradiation light dose of the UV rays in step (S2) is 10-2,000 mJ/cm².

34. The method for manufacturing an electrode for a lithium secondary battery according to claim 21, wherein the irradiation light dose of the UV rays in step (S4) is 200-10,000 mJ/cm².

35. A lithium secondary battery comprising the electrode for a lithium secondary battery as defined in any one of claims 1 to 20.
